# EUROPEAN PATENT SPECIFICATION

(11) **EP 0 452 373 B1**
(45) Date of publication and mention of the grant of the patent: **05.10.1994**
(21) Application number: 90901520.8
(22) Date of filing: 02.01.1990
(51) Int. Cl.: B01D 46/00, B01D 46/24, B01D 46/48, B01D 50/00

(54) **MATTER COLLECTION SYSTEM INCLUDING OFF-LINE FILTER CLEANING**
STAUBSAMMELSYSTEM MIT OFF-LINE-FILTERREINIGUNG
SYSTEME COLLECTEUR DE SUBSTANCES AVEC NETTOYAGE DES FILTRES EN MODE AUTONOME

(30) Priority: 03.01.1989 CA 587446; 12.12.1989 US 448845
(43) Date of publication of application: 23.10.1991
(73) Proprietor: FUTURE AIR TECHNOLOGIES INC., Ontario L2R 3C4 (CA)
(72) Inventor: PITTMAN, James, Dundas, Ontario L9H 6L6 (CA)
(74) Representative: Boydell, John Christopher
(86) International application number: CA9000005
(87) International publication number: WO9007369

(56) References cited:
- EP-A- 0 246 106
- US-A- 2 892 512
- US-A- 4 277 255
- US-A- 4 411 674
- US-A- 4 735 639

## Description

This invention relates to apparatus for the removal and collection of particulate and fibrous matter. The apparatus is particularly intended for use as an asbestos removal system, but has a broader application to the removal of particulate and fibrous matter generally.

For convenience, reference will be made throughout this specification to asbestos and asbestos removal. However, it should be understood that this reference is as an example only.

In some applications, the matter being collected may be toxic or otherwise harmful to people or the environment, so the escape of the solid matter must be prevented. This is the case with asbestos removal systems, for example.

The potential health problems associated with asbestos fibers, especially the "fines" or very short fibers, have become very well publicized, leading to extensive efforts to remove asbestos insulation from buildings and other sites. Typically, the asbestos is stripped from the walls and ceilings, and then collected for disposal, by workers wearing suitable protective clothing and breathing apparatus.

There is thus a need for apparatus which can effectively collect the stripped asbestos fibers, without permitting the fines to escape into the environment.

The obvious way to deal with the collection of asbestos and asbestos fibers is with, in effect, a large vacuum cleaner equipped with suitable filters. This indeed has been attempted in various configurations in the prior art. However, since the filters tend to become clogged very rapidly, they require frequent cleaning. Problems in the past have included how to clean the filters efficiently, how to clean the filters without shutting down operations, and how to avoid the escape of asbestos fibers during the filter cleaning process.

It is highly undesirable to have to shut down operations for filter cleaning. Accordingly, there are prior art systems in which filters may undergo continuous or periodic cleaning by means such as vibration or mechanical cleaning, or by the use of pulsed air jets directed back through the filters. Such cleaning means suffer from the fact that the filter remains in operation during the cleaning, which greatly reduces the effectiveness of the cleaning; debris stripped from the filter tends to be drawn right back to the filter by the gas stream.

There is thus a need for apparatus in which cleaning of filters can be conducted more effectively, without needing to shut down the operation of the system. The need is particularly evident in applications such as asbestos removal, where large volumes of solid matter are involved, since the filters tend to become clogged very rapidly and thus require frequent cleaning.

Related to the problem of clogging of filters is the inability of prior art systems to operate at sufficiently high suction (i.e. low pressure, or large pressure differential below ambient pressure). One reason for this inability is the large pressure differential across the filters as they become clogged. Another reason relates to the difficulty of sealing the system to maintain the high suction (low pressure). It has to be possible to remove the asbestos from the system without seriously affecting the operating pressure.

Being able to operate at high suction (low pressure) means being able to run a longer intake hose and means better performance in terms of system throughput, resulting in reduced operating costs in general and labor costs specifically. In addition, where the asbestos is being removed from a building, the lower operating pressure makes it easier to maintain the desired pressure differential between the inside and outside of the building from which the asbestos is being removed.

US-A-4735639 describes an industrial vacuum loading apparatus which ingests a mixture of particulate matter and ambient air and collects the particulate matter for disposal while filtering the ingested air before discharging it to atmosphere. The apparatus comprises a vacuum blower, a receiver tank with a removable collection bag therein and a collection hose connected to its exterior, and a filtration module connected between the blower and the receiver tank. The filtration module comprises two filter units, each having a filter assembly, together with selector valves which enable the use of either or both filter units during operation, and also to enable purging of either one of the filter units, so that matter collected by the filter can be fed back to the collection bag in the receiver tank.

In view of the above problems, the invention thus seeks to provide improved apparatus for filtering solid matter from a gas stream, including improved cleaning of filters.

According to the invention, there is provided apparatus for the removal of matter entrained in a gas stream in a conduit, said apparatus comprising: a displacement chamber having an inlet connected to said conduit to receive said gas stream, a solid matter collecting and discharging area at the bottom thereof for receiving solid matter which falls from said gas stream in said displacement chamber, and a gas stream exit from an upper area thereof; at least two filter units, each comprising at least one filter mounted in a housing, said filters defining dirty and clean areas upstream and downstream of said filters respectively, said dirty areas being open to the bottom of said housing such that solid matter may fall therefrom to the bottom of said housing, each said housing being connected in parallel to said gas stream exit of said displacement chamber; an outlet at the bottom of each said filter unit housing for removing said solid matter, and an outlet from a clean area of said filter housing thereof for said gas stream; and for each filter unit, a first valve between it and said displacement chamber gas stream exit for blocking flow through said filter unit when desired for cleaning of said filter unit, a second valve in said filter housing gas stream outlet for actuation in conjunction with said first valve to completely isolate said filter unit from said conduit, a third valve in said solid matter outlet at the bottom of said filter housing, and a fourth valve connecting said filter housing to a gas source at higher pressure than the pressure in said displacement chamber; said apparatus being characterised by a duct permanently connected between said solid matter outlet from each filter housing and said displacement chamber via said third valve, whereby said solid matter accumulating near said solid matter outlet may be routed to said displacement chamber by closing said first and second valves to isolate said filter unit and then opening said third and fourth valves; and pressure-sealed conveying means connected to said solid matter collecting and discharge area in said displacement chamber whereby solid matter may be removed from said displacement chamber without stopping said gas stream.

In the invention, the filters in the filter units can be cleaned without removing them from the system, and without affecting the integrity of the system. Preferably, the cleaning is effected by compressed air jets directed towards the filters from the clean side, operable to dislodge solid matter from the dirty side. In the preferred embodiment, including a displacement chamber, the particulate and/or fibrous matter cleaned from the filters is recycled into the displacement chamber, so that discharge to the atmosphere is prevented.

In the preferred embodiment for collection of asbestos particles and fibers for example, the outlets at the bottom of each filter unit and the collecting and discharge area at the bottom of the collection chamber are sealed from the surrounding environment to prevent the escape of filtered solid matter, the filtered solid matter being discharged into bags via at least one bagging unit sealed to the outlets and the discharge area. Preferably in such an embodiment third valves are provided at the solid matter outlet of each filter unit, and these outlets are connected back to the collection chamber via a return conduit. Fourth valves from the filter unit are connected to a gas source at higher pressure than the pressure in the collection chamber - such as the ambient atmosphere - whereby the solid matter may be routed to the collection chamber by closing the first and second valves (upstream and downstream respectively of the filter units) and opening the third and fourth valves.

The solid matter collection and discharge assembly at the bottom of the collection chamber preferably includes a discharge tunnel and a piston reciprocating in the discharge tunnel to force a plug of solid matter along the discharge tunnel. Sealing of the discharge area is by virtue of the plug of solid matter in the discharge tunnel jamming back into a throat portion. The discharge tunnel preferably leads directly to automatic bagging apparatus, which bags the solid matter without permitting it to escape to the environment.

Further features of the invention will be described or will become apparent in the course of the following detailed description.

In order that the invention may be more clearly understood, the preferred embodiment thereof will now be described in detail by way of example, with reference to the accompanying drawings, in which:
Fig. 1 is a schematic illustration of the apparatus;
Fig. 2 is a plan view of a trailer containing the apparatus;
Fig. 3 is an elevation view at A-A in Fig. 2;
Fig. 4 is an elevation view at B-B in Fig. 2;

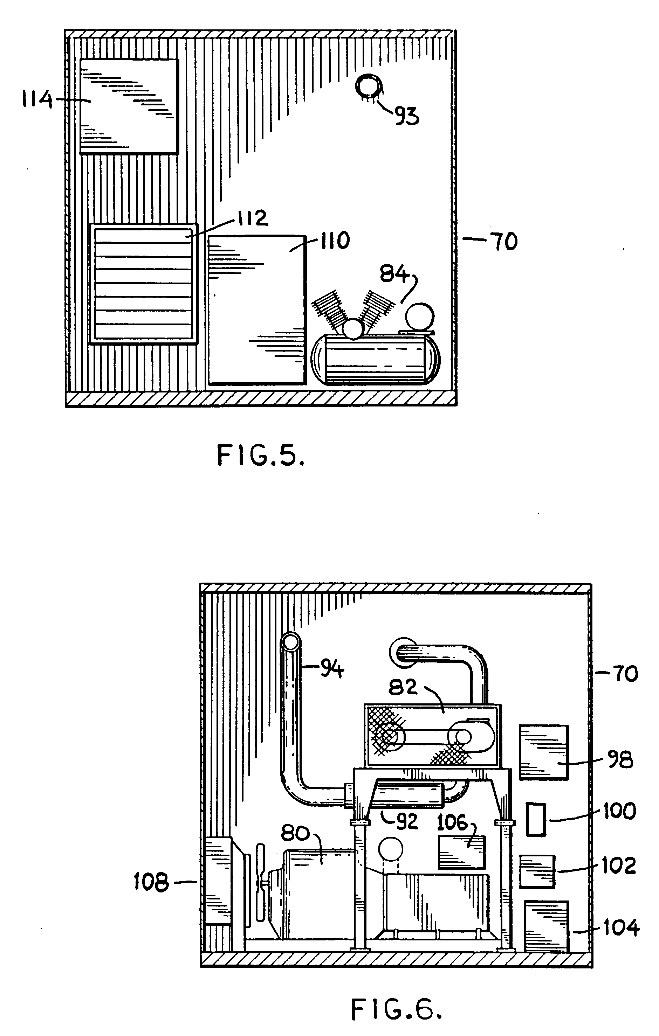

Fig. 5 is an elevation view at C-C in Fig. 2;
Fig. 6 is an elevation view at D-D in Fig. 2;

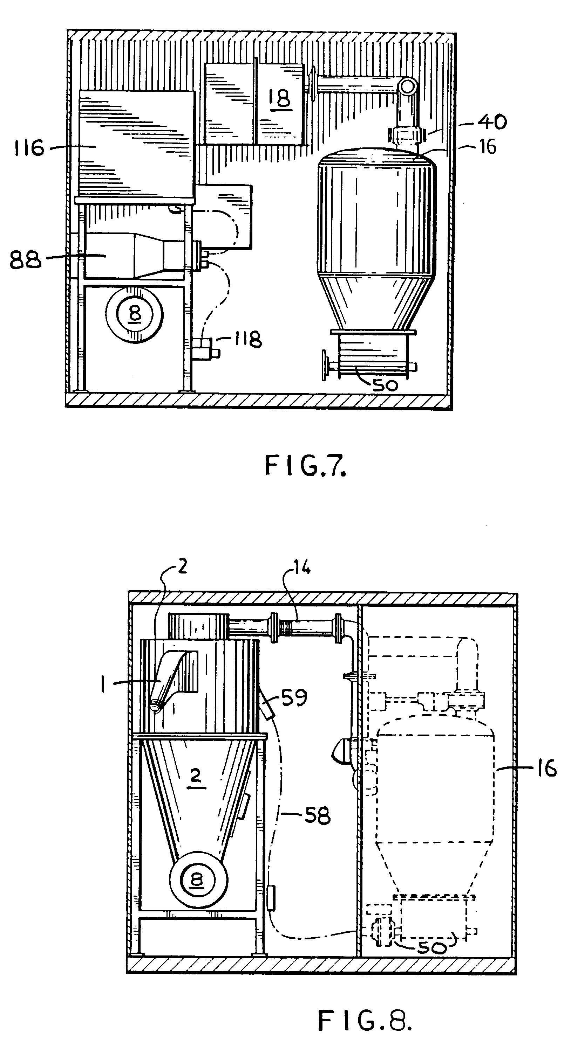

Fig. 7 is an elevation view at E-E in Fig. 2;
Fig. 8 is an elevation view at F-F in Fig. 2;
Fig. 9 is a perspective of one of the filters;
Fig. 10 is an illustration of a horizontal plate in each filter unit at the top the filters;

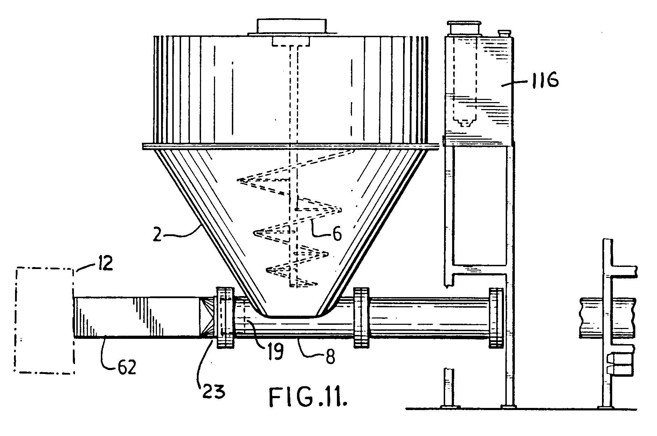

Fig. 11 another elevation view of the collection chamber or "displacement chamber";
Figs. 12A and 12B are cross-sections of the discharge tunnel, showing the piston in the extended and retracted positions respectively; and

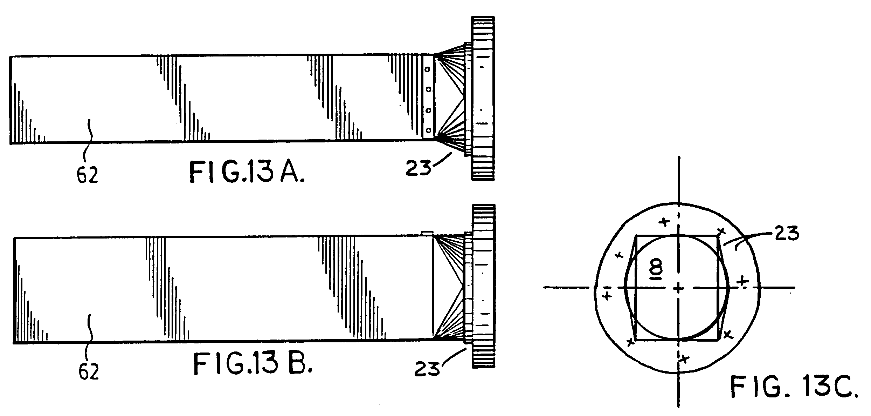

Figs. 13A, 13B and 13C show top, side and end views respectively of the discharge tunnel.

The gas stream is, for example, one in which asbestos or other debris is sucked through a hose 1, from a building from which asbestos is being removed, for example, into the collection chamber or "displacement chamber" 2. A baffle 3 directs the incoming air downwardly within the displacement chamber. The system is operated at negative pressure, i.e. under suction, by virtue of a large blower 4, which acts to draw air through the system. On entering the displacement chamber, most of the solid matter falls to the bottom. A vertically mounted screw 6 urges the solid matter towards the bottom of the chamber.

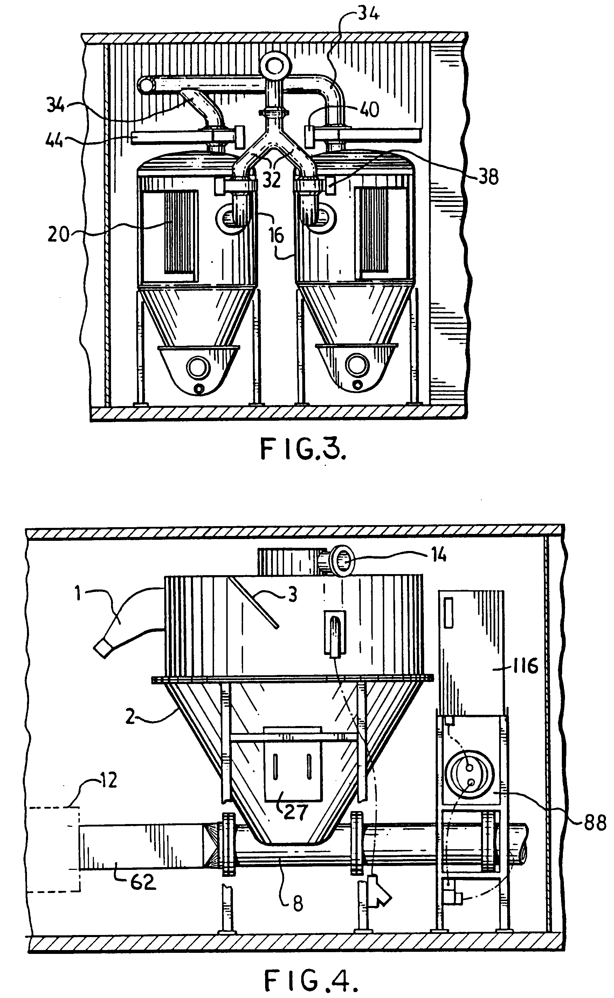

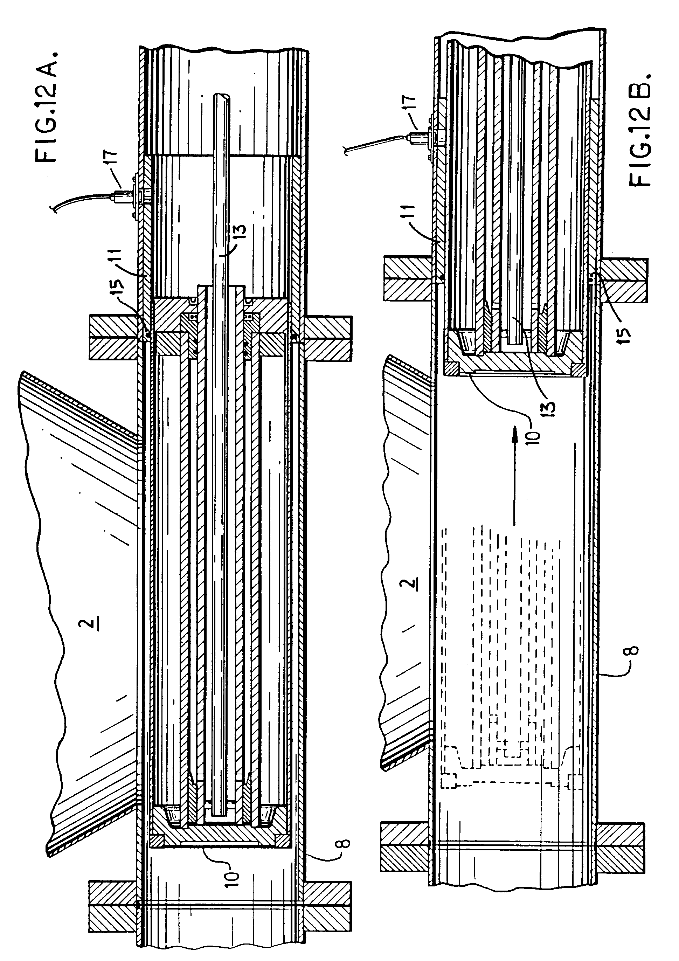

In embodiments where a sealed system is required in order to prevent the escape of collected matter to the environment, as is the case with asbestos collection, the bottom of the displacement chamber preferably opens into the top of a horizontal discharge tunnel 8, which in the preferred embodiment is cylindrical. A hydraulic piston 10 (see Figs. 12A and 12B) reciprocates in the tunnel and acts to compact a plug of solid matter and force it out through the discharge tunnel to an automatic bagging machine 12 (shown schematically in Fig. 4). As will be described in greater detail later, the compacted solid matter acts to seal the discharge tunnel from the ambient air pressure, to prevent blow backs and to maintain the negative pressure in the displacement chamber.

The air leaves the displacement chamber 2 from the top via a displacement chamber exhaust 14. Although much of the solid matter is removed in the displacement chamber, this air does still have a high solid matter content. The entrained solid matter must be filtered from the air. This is accomplished by filter units 16, preferably followed by a backup HEPA filter unit 18. The air from the displacement chamber is passed through one of the filter units 16. The cleaned air is subsequently passed through backup filter 18 before discharge into the atmosphere. The backup filter is primarily for the purpose of avoiding an accidental release of contaminant in the event of failure of one of the filter units.

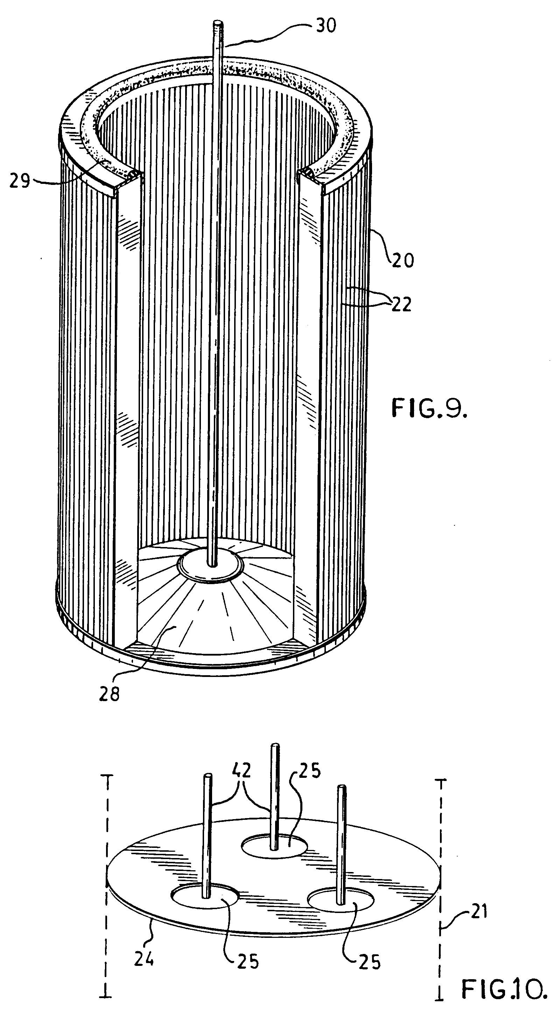

Each filter unit 16 includes three cylindrical cartridge-type filters 20 approximately 0.66 meters (26 inches) high and 0.305 meters (12 inches) in diameter, stacked side by side in the filter housing 21. Each filter 20, shown in Fig. 9, is a Gore-Tex (trademark) filter, supplied by W.L. Gore & Associates, Inc., of Elkton, Maryland, U.S.A.. Each filter has a series of pleated screens 22 which remove the solid matter from the air. The outside of each filter is the "dirty" side, and the center is the "clean" side. The filters have an enclosed bottom 28, and an open top with a resilient sealing ring 29 around the upper annulus. Inside the filter unit near the top thereof is a horizontal plate 24, shown in Fig. 10, having three circular openings 25 approximately 0.23 meters (9 inches) in diameter, corresponding to the open top of the filters. The filters are pulled upwardly by bolts 30 to compress the sealing rings against the horizontal plate.

For each filter unit, the filter inlet 32 from the displacement chamber is at the side of the filter housing 21. The filter exhaust 34 draws from the top center of the filter unit housing, i.e. on the clean side of the screens 22. The only route from the inlet to the exhaust is thus through the pleated screens of the filters, then up and out through the openings 25 in the horizontal plate, and then out the exhaust.

As mentioned above, the problem in the past has always been how to clean the filters. In the present invention, this problem has been solved by utilizing at least two filter units 16, so that at least one can be on line at any given time while one or more other units can be off line for cleaning. The simplest case is where there are two filter units, and this is the case which will be described in the following.

While one filter unit 16 is operating, the other filter unit is in a cleaning or purge cycle. During the purge cycle for a filter unit, pneumatic valves 38 and 40 are closed to isolate the filter unit. Three air jets 42, one near the top of each filter unit in the area above the horizontal plate 24 are fed from a manifold 44 connected to a compressor 46. They are then activated in rapid sequence to blow the accumulated solid matter off the screens. The air jets are located a few inches above the top of each filter, with the blast aimed downwardly. The jets have no special nozzle, but rather consist simply of an open-ended pipe, which produces a blast in a cone of typically about 20 degrees, i.e. 10 degrees from the vertical in each direction, which blows outwardly from the inside of the filters.

The solid matter blown from the filter by the air jets falls to the bottom of the filter housing 21. In the simplest embodiment, the solid matter can then simply be dumped out into a container or onto a conveyer, or can be otherwise disposed of. In the sealed system embodiment, the system is somewhat more complex. In the bottom of the filter housing, an agitator 50 keeps the solid matter in suspension to prevent it from settling and compacting. The agitator is driven by a motor connected to the agitator shaft via a chain. After the air jets are finished cleaning the screens, pneumatic return valve 55 is opened briefly as well as a valve 56 to atmosphere at the back of the filter unit, so that the solid matter at the bottom of the filter unit is drawn back into the displacement chamber 2 via a return pipe 58 to main filter unit emptying point 59. Valves 55 and 56 are then closed. The outlet of valve 56 is protected by a HEPA filter, so that accidental release of contaminant is avoided. The filter unit is then ready when needed. When it is time to clean the other filter unit, the valves 38 and 40 can be reopened to put the filter back on line, and the corresponding valves can be closed to isolate the other filter unit for cleaning.

Preferably, an automated or at least semi-automated control system is employed for the cycling between filters. Pressure gauges are used to detect the pressure drop across the filter units. When too high a pressure differential is detected, indicating that the filter is becoming clogged, that filter is taken off line for cleaning and the other filter goes on line. For example, the system may be designed with an operating pressure of say 27.9 kPa (112 inches of water), with 25.4 kPa (102 inches) as the desired minimum suction. Pressure guages sensing the pressure on either side of the filter may be used to trigger the switch to the other filter when the pressure drop across the filters rises to 2.5 kPa (10 inches), i.e. when the suction drops from 27.9 kPa (112 inches) to 25.4 kPa (102 inches).

With this system of filtration and filter cleaning, frequent cleaning of the filters is possible, so that the filters can be kept operating at near maximum efficiency and near minimum pressure drop. This means better overall performance, and lower operating pressure (higher suction) with the advantages mentioned previously. Clogging of the filters would mean not only less suction, but also the possibility of damage to the filters due to a large pressure differential across them. Frequent cleaning avoids these problems, and also means that the asbestos particles or other solid matter do not stay on the filter or in the system generally for any significant length of time, so that they do not have time to cake together or undergo other undesirable mechanical or chemical changes.

The accumulated solid matter in the discharge tunnel 8 beneath the displacement chamber 2 is ejected at suitable intervals as a cylindrical slug of material about 0.91 to 1.2 meters (three to four feet) long by about 0.305 meters (one foot) in diameter, preferably into automatic bagging apparatus 12, illustrated schematically.

The hydraulic piston 10 has a hardened steel crown (chromed) connected via a connecting rod 13 to the hydraulic piston assembly, and runs in a phosphor bronze liner 11 with scraper rings 15. A proximity switch 17 is used to detect the position of the piston for control purposes. The piston forces a plug of solid matter down the discharge tunnel 8. The discharge tunnel has a reducing collar 19 positioned therein, to provide a short section of reduced diameter. The discharge tunnel then flares from the reduced diameter to a slightly larger overall diameter at the flanged adapter 23, which also changes the cross-section from circular to rectangular. The combined effect of these diameter and shape changes and the reducing collar 19 in particular is to define a throat, the sealing of the discharge area being by virtue of the plug of solid matter jamming rearwardly in the throat. Once the piston retracts, the negative pressure in the displacement chamber cannot draw the plug back in; the plug jams in the throat, thereby choking off that route so that there is no pressure loss. Beyond the throat, in the portion 62 having a rectangular cross-section, the discharge tunnel has a slight outward taper. This slight taper prevents the material in the discharge tunnel from becoming excessively compacted and in fact jammed as it moves towards the automatic bagging apparatus 12. The bagging apparatus, illustrated schematically, automatically bags or preferably double-bags the material. Manual bagging or other means of disposal would be an option, but would not take maximum advantage of the system's capabilities.

This discharge tunnel and seal not only provides an efficient and effective means of getting the asbestos or other material out of the displacement chamber, but also provides a very effective seal during operations in order to maintain the low system operating pressure (high suction), with the above-mentioned advantages.

In some cases, it may be desirable to inject binding agents into the tunnel, depending on the consistency of the asbestos, to ensure proper compaction.

It should be appreciated that any other suitable means of removing the material from the bottom of the displacement chamber in a sealed fashion could be used, the above-described means being merely a preferred means of doing so. For example, other embodiments contemplate the use of a rotary valve (similar in concept to a revolving door).

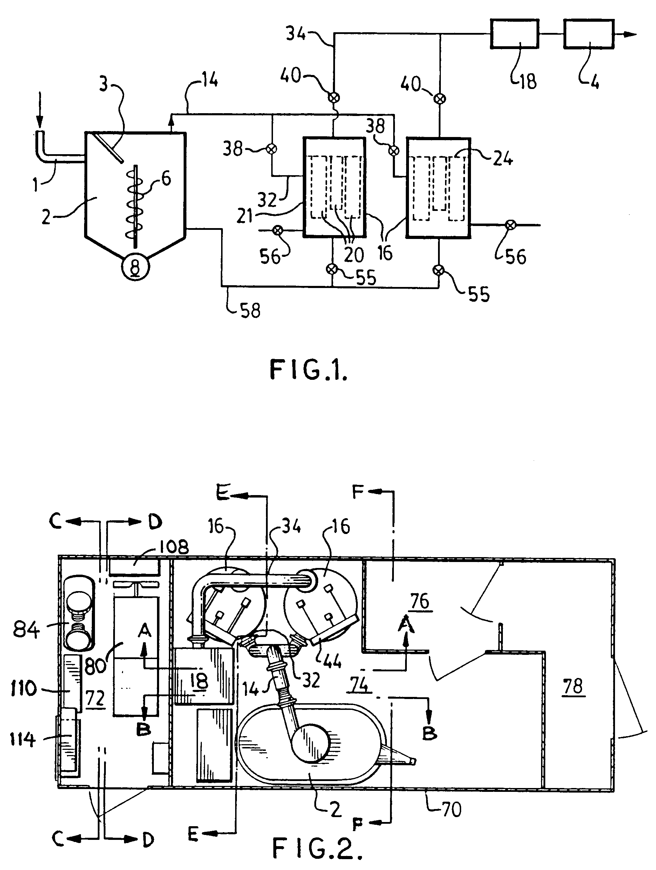

Referring now to Fig. 2, all of the apparatus illustrated in Fig. 1 and described above is housed in a trailer 70 which can be brought to the site where the solid matter is to be removed. The trailer is divided into several sections, namely an engine room 72, a process room 74, an airlock/shower/change room 76, and a control booth 78. Workers entering the process room must pass through the airlock/shower/change room via the control booth. The process room 74 is at negative pressure of approximately 0.025 to preferably 0.075 kPa (0.1 to preferably 0.3 inches of water) during operations, by virtue of a negative-pressure fan unit (not shown) protected by pvc filters. Thus any spillage during the bagging operation, for example, still does not result in any release of asbestos fibers to the environment. An internal vacuum cleanup line (not illustrated) is provided, connected to the displacement chamber as the low pressure source, so that the operator can immediately clean up any minor spills within the process room, for example if there is some spillage during replacement of a filter. Since operation of the system can continue during a filter replacement, there is no fear of release of contaminant even then.

The engine room contains a diesel generator 80 to provide power for the system and its controls, the main blower 82 and the air compressor and tank 84. The outlet line from the backup filter 18 passes from the backup filter in the process room, through the wall into the engine room, through the blower, through a silencer 92, out an exhaust 93 via exhaust duct 94. Other components in the engine room include a three-way isolator switch 98, 100 Amp fusible disconnect 100, 110/220V fuse panel 102, 110/220V transformer 104, generator electrical panel 106, air outlet 108 with acoustic louvers, diesel fuel tank 110, air inlet 112 with acoustic louvers, and electrical panel 114.

The process room contains the displacement chamber 2 and the filter units 16, as well as a hydraulic pump 88 which drives the piston 10 to compact and expel the plug of solid matter from the bottom of the displacement chamber. The hydraulic pump uses fluid from a hydraulic oil reservoir 116, complete with temperature and level gauges. A hydraulic oil solenoid valve block 118 is mounted on a frame member.

Fig. 3 shows the two filter units 16 with their exhausts 34 leading to the backup filter 18, and filter unit inlets 32 connected to the displacement chamber exhaust 14. Pneumatically operated valves 38 and 40 are provided at the inlet and outlet of each filter unit. At the bottom of each filter unit is an agitator unit 50 and dust removal line or return pipe 58.

Fig. 4 shows the displacement chamber 2 with its inlet 1 to which the inlet hose is connected. The inlet hose is of indeterminate length, with any suitable number of sections coupled together to make up the hose length required to suit the particular job site. The displacement chamber exhaust 14 leads to the filter units 16. An inspection door 27 is provided. The hydraulic pump 88 drives the piston 10 in the discharge tunnel 8, to force a plug of solid matter towards the automatic bagging unit 12, shown schematically.

Various safety features are included. For example, if a filter blows, the absence of a pressure drop across the filter is detected immediately to close off that filter unit for repair.

It will be appreciated that the above description relates to the preferred embodiment by way of example only. Many variations on the invention will be obvious to those knowledgeable in the field, and such obvious variations are within the scope of the invention as described and claimed, whether or not expressly described.

For example, the backup filter 18 may not be strictly essential in normal operations, though it is certainly desirable for safety purposes.

In embodiments where it is not essential that the escape of matter to the environment be prevented, the outlet from the filters need not be fed back to the vacuum tank. Instead, the outlet may lead directly to a waste container, conveyor, bagging equipment, or the like.

In the simplest alternative embodiment, the displacement chamber 2 may be dispensed with, in which case the system simply comprises an inlet 1 leading to two filter units 16 installed in parallel, with each filter having an outlet. The outlets may or may not feed back into the same duct. The displacement chamber is generally advantageous where there is a large volume of solid matter in the gas stream, since much of that solid matter may thus be removed upstream of the filters.

As discussed above, the invention is particularly intended for use as an asbestos removal system, but has a broader application to the removal of particulate and fibrous matter generally.

## Claims

1. Apparatus for the removal of matter entrained in a gas stream in a conduit, said apparatus comprising:
a displacement chamber (2) having an inlet (1) connected to said conduit to receive said gas stream, a solid matter collecting and discharging area at the bottom thereof for receiving solid matter which falls from said gas stream in said displacement chamber (2), and a gas stream exit (14) from an upper area thereof;
at least two filter units (16), each comprising at least one filter (20) mounted in a housing (21), said filters (20) defining dirty and clean areas upstream and downstream of said filters respectively, said dirty areas being open to the bottom of said housing such that solid matter may fall therefrom to the bottom of said housing, each said housing being connected in parallel to said gas stream exit (14) of said displacement chamber;
an outlet at the bottom of each said filter unit housing (21) for removing said solid matter, and an outlet (34) from a clean area of said filter housing thereof for said gas stream; and
for each filter unit (16), a first valve (38) between it and said displacement chamber gas stream exit (14) for blocking flow through said filter unit when desired for cleaning of said filter unit, a second valve (40) in said filter housing gas stream outlet for actuation in conjunction with said first valve (38) to completely isolate said filter unit (16) from said conduit, a third valve (55) in said solid matter outlet at the bottom of said filter housing, and a fourth valve (56) connecting said filter housing (21) to a gas source at higher pressure than the pressure in said displacement chamber (2);
said apparatus being characterised by a duct (58) permanently connected between said solid matter outlet from each filter housing (21) and said displacement chamber (2) via said third valve (55), whereby said solid matter accumulating near said solid matter outlet may be routed to said displacement chamber (2) by closing said first and second valves (38,40) to isolate said filter unit (16) and then opening said third and fourth valves (55,56); and
pressure-sealed conveying means connected to said solid matter collecting and discharge area in said displacement chamber (2) whereby solid matter may be removed from said displacement chamber (2) without stopping said gas stream.

2. Apparatus as recited in claim 1, further characterised by jets (42) within each filter unit positioned in said clean areas to direct air through said filters (20) towards said dirty areas, said air jets being connected to a pressurised air source (44,46), whereby solid matter clinging to said filters (20) may be removed from them when flow through said filter unit (16) is blocked by at least said first valve (38), said solid matter then being free to fall to the bottom of said filter housing (21).

3. Apparatus as recited in claim 1, characterised by the pressure in said displacement chamber (2) being below ambient pressure external to the apparatus, and in which said gas source to which said fourth valves (56) connect is the ambient air external to the apparatus.

4. Apparatus as recited in claim 1, where said pressure-sealed conveying means connected to said solid matter collecting and discharge area in said displacement chamber (2) is characterised by a discharge tunnel (8) for receiving said solid matter through an opening at the bottom of the displacement chamber (2), and a piston (10) reciprocating in said discharge tunnel (8) to force a plug of solid matter along said discharge tunnel from the area of said opening, the sealing of said discharge area being by virtue of the plug of solid matter in said discharge tunnel (8), the pressure in said displacement chamber (2) being less than ambient pressure around the apparatus.

5. Apparatus as recited in claim 4, characterised by the area of said discharge tunnel (8) being reduced down-tunnel from the area of said piston (10), said reduced area portion defining a throat (19,23), the sealing of said discharge area being by virtue of the plug of solid matter jamming rearwardly in said throat by virtue of the ambient pressure being greater than the pressure in the displacement chamber (2).

6. Apparatus as recited in claim 1, characterised by a blower (4) for creating suction, said blower being connected to said inlet (1) via said displacement chamber (2), said displacement chamber (2) being connected to receive solid matter entrained in the gas stream from said inlet (1) and having an upper exhaust (14) leading to said filter units (16) and a pressure-sealed bottom exit for solid matter falling from said gas stream; said at least two filter units (16) being installed in parallel between said displacement chamber (2) and said blower (4), said dirty areas of said filters (20) being connected to receive said gas stream from said upper exhaust (14) from said displacement chamber (2), and said clean areas of said filters (20) being connected to lead towards said blower (4).

7. Apparatus as recited in claim 6, further characterised by air jets (42) within each filter unit positioned in said clean areas to direct air through said filters (20) towards said dirty areas, said air jets being connected to a pressurised air source (44,46), for thereby cleaning the filters (20) to remove solid matter therefrom when flow therethrough is blocked by at least said first valve (38), such that solid matter clinging to said filters falls to the bottom of said filter housing (21).

8. Apparatus as recited in claim 6, in which said bottom exit for said solid matter is characterised by an opening into a discharge assembly, said discharge assembly comprising a tunnel (8) and a piston (10) reciprocating in said tunnel to force a plug of solid matter along said tunnel from the area of said opening, the sealing of said bottom exit being by virtue of the solid matter plug in said tunnel.

9. Apparatus as recited in claim 8, characterised by said tunnel (8) having a reduced area portion down-tunnel from said piston (10), said reduced area portion defining a throat (23,19), the sealing of said bottom exit being by virtue of said plug of solid matter jamming rearwardly in said throat.

10. A sealed trailer containing the apparatus of claim 1 or 6, said trailer having a fan unit drawing air therefrom through a filter, whereby the interior of said trailer (70) is maintained at a slight negative pressure at all times, so that any escape of matter from said apparatus remains contained within said trailer or is trapped by said fine filter.

## Patentansprüche

1. Vorrichtung zum Entfernen von Stoffen, die in einem Gasstrom in einem Kanal mitgerissen werden, umfassend:
eine Verdrängungskammer (2) mit einem Einlaß (1), der mit dem Kanal verbunden ist, um den Gasstrom aufzunehmen, einen Feststoffsammel- und Ablaßbereich, an deren Boden zur Aufnahme von Feststoffen, die von dem Gasstrom in der Verdrängungskammer (2) herabfallen, und einen Gasstromausgang (14) von einem oberen Bereich derselben;
mindestens zwei Filtereinheiten (16), die jeweils mindestens einen Filter (20) umfassen, der in einem Gehäuse (21) montiert ist, wobei die Filter (20) schmutzige und saubere Bereiche jeweils oberstromig und unterstromig der Filter festlegen, wobei die schmutzigen Bereiche zum Boden des Gehäuses offen sind, so daß Feststoffe von dort zum Boden des Gehäuses fallen können, wobei jedes Gehäuse parallel mit dem Gasstromausgang (14) der Verdrängungskammer verbunden ist;
einen Auslaß am Boden jedes Filtereinheitsgehäuses (21) zum Entfernen der Feststoffe und einen Auslaß (34) von einem sauberen Bereich des Filtergehäuses für den Gasstrom; und
für jede Filtereinheit (16) ein erstes Ventil (38) zwischen dieser und dem
Verdrängungskammergasstromausgang (14), um einen Strom durch die Filtereinheit zu blockieren, wenn dies zum Reinigen der Filtereinheit gewünscht wird, ein zweites Ventil (40) in dem Filtergehäusegasstromauslaß zur Betätigung im Zusammenhang mit dem ersten Ventil (38), um die Filtereinheit (16) vollständig von dem Kanal zu isolieren, ein drittes Ventil (55) in dem Feststoffauslaß am Boden des Filtergehäuses, und ein viertes Ventil (56), welches das Filtergehäuse (21) mit einer Gasquelle unter höherem Druck als dem in der Verdrängungskammer (2) verbindet;
**gekennzeichnet** durch
eine Leitung (58), die ständig den Feststoffauslaß von jedem Filtergehäuse (21) mit der Verdrängungskammer (2) über das dritte Ventil (55) verbindet, wodurch die Feststoffe, die sich in der Nähe des Feststoffauslasses ansammeln, zu der Verdrängungskammer (2) geleitet werden, indem das erste und zweite Ventil (38, 40) geschlossen werden, um die Filtereinheit (16) zu isolieren und dann das dritte und vierte Ventil (55, 56) geöffnet werden; und
durch eine druckabgedichtete Fördereinrichtung, die mit dem Feststoffsammel- und Ablaßbereich in der Verdrängungskammer (2) verbunden ist, wodurch Feststoffe von der Verdrängungskammer (2) ohne Anhalten des Gasstromes entfernt werden können.

2. Vorrichtung nach Anspruch 1, ferner gekennzeichnet durch Strahlen (42) innerhalb jeder Filtereinheit, die in den sauberen Bereichen angeordnet sind, um Luft durch die Filter (20) in Richtung der schmutzigen Bereiche zu leiten, wobei die Luftstrahlen mit einer Luftdruckquelle (44, 46) verbunden sind, wodurch an den Filtern (20) anhaftende Feststoffe entfernt werden können, wenn die Strömung durch die Filtereinheit (16) durch zumindest das erste Ventil (38) blockiert wird, wobei die Feststoffe dann auf den Boden des Filtergehäuses (21) fallen können.

3. Vorrichtung nach Anspruch 1, dadurch gekennzeichnet, daß der Druck in der Verdrängungskammer (2) niedriger als der Umgebungsdruck außerhalb der Vorrichtung ist, und daß die Gasquelle, an welche die vierten Ventile (56) verbunden sind, die Umgebungsluft außerhalb der Vorrichtung ist.

4. Vorrichtung nach Anspruch 1, bei der die druckgedichtete Fördereinrichtung, die in der Verdrängungskammer (2) mit dem Feststoffsammel- und Ablaßbereich verbunden ist, gekennzeichnet ist durch einen Ablaßtunnel (8) zur Aufnahme der Feststoffe durch eine Öffnung am Boden der Verdrängungskammer (2) und durch einen Kolben (10), der sich in dem Ablaßtunnel (8) hin- und herbewegt, um einen Stopfen aus Feststoffen von dem Bereich der Öffnung entlang des Ablaßtunnels zu treiben, wobei die Abdichtung des Ablaßbereiches mit Hilfe des Stopfens aus Feststoffen in dem Ablaßtunnel (8) durchgeführt wird, wobei der Druck in der Verdrängungskammer (2) geringer ist als der Umgebungsdruck um die Vorrichtung herum.

5. Vorrichtung nach Anspruch 4, dadurch gekennzeichnet, daß der Bereich des Ablaßtunnels (8) tunnelabwärts von dem Bereich des Kolbens (10) verringert ist, wobei der verringerte Bereichsabschnitt einen Hals (19, 23) festlegt, wobei die Abdichtung des Ablaßbereiches mit Hilfe des Stopfens aus Feststoffen erfolgt, der sich hinten in dem Hals mit Hilfe des Umgebungsdrucks festklemmt, welcher größer ist als der Druck in der Verdrängungskammer (2).

6. Vorrichtung nach Anspruch 1, gekennzeichnet durch ein Gebläse (4) zum Erzeugen einer Saugung, das mit dem Einlaß (1) über die Verdrängungskammer (2) verbunden ist, die verbunden ist, um in dem Gasstrom mitgerissene Feststoffe von dem Einlaß (1) aufzunehmen und die einen oberen Auslaß (14) hat, der zu den Filtereinheiten (16) führt, sowie einen druckabgedichteten Bodenausgang für Feststoffe, die von dem Gasstrom herabfallen; wobei die mindestens zwei Filtereinheiten (16) parallel zwischen der Verdrängungskammer (2) und dem Gebläse (4) angeordnet sind, wobei schmutzige Bereiche der Filter (20) verbunden sind, um den Gasstrom von dem oberen Auslaß (14) von der Verdrängungskammer (2) aufzunehmen und die sauberen Bereiche der Filter (20) verbunden sind, um in Richtung des Gebläses (4) zu führen.

7. Vorrichtung nach Anspruch 6, ferner gekennzeichnet durch Luftstrahlen (42) innerhalb jeder Filtereinheit, die in den sauberen Bereichen angeordnet sind, um Luft durch die Filter (20) in Richtung der schmutzigen Bereiche zu leiten, wobei die Luftstrahlen mit einer Druckluftquelle (44, 46) verbunden sind, um von diesen Feststoffe zu entfernen, wenn die Strömung durch zumindest das erste Ventil (38) blockiert wird, so daß an den Filtern anhaftende Feststoffe auf den Boden des Filtergehäuses (21) herabfallen.

8. Vorrichtung nach Anspruch 6, dadurch gekennzeichnet, daß der Bodenausgang für die Feststoffe gekennzeichnet ist durch eine Öffnung in eine Ablaßanordnung, die einen Tunnel (8) und einen Kolben (10) umfaßt, der sich in dem Tunnel hin- und herbewegt, um von dem Öffnungsbereich einen Stopfen aus Feststoffen entlang des Tunnels zu drängen, wobei die Abdichtung des Bodenausgangs mit Hilfe des Feststoffstopfens in dem Tunnel erfolgt.

9. Vorrichtung nach Anspruch 8, dadurch gekennzeichnet, daß der Tunnel (8) einen Abschnitt mit verringerter Fläche tunnelabwärts des Kolbens (10) besitzt, welcher Abschnitt einen Hals (23, 19) festlegt, wobei das Abdichten des Bodenausgangs mit Hilfe des Stopfens aus Feststoffen erfolgt, die sich nach hinten in dem Hals verklemmen.

10. Abgedichteter Anhänger, enthaltend die Vorrichtung nach Anspruch 1 oder 6, wobei der Anhänger eine Gebläseeinheit besitzt, die Luft von dort durch ein Filter saugt, wodurch das Innere des Anhängers (70) ständig unter einem leichten negativen Druck gehalten wird, so daß jedes Material, das von der Vorrichtung kommt, innerhalb des Anhängers bleibt oder durch den Feinfilter eingefangen wird.

## Revendications

1. Appareillage pour l'enlèvement de matières entraînées dans un écoulement de gaz dans un conduit, ledit appareillage comprenant :
- une chambre collectrice (2) comportant une entrée (1) reliée audit conduit pour recevoir ledit écoulement de gaz, une zone de collecte et de décharge de matières solides située à sa base pour recevoir des matières solides qui tombent dudit écoulement de gaz dans ladite chambre collectrice (2), une sortie d'écoulement de gaz (14) à partir d'une zone supérieure de ladite chambre;
- au moins deux unités de filtrage (16), comprenant chacune au moins un filtre (20) monté dans un carter (21), lesdits filtres (20) définissant des zones encrassées et propres respectivement en amont et en aval desdits filtres, lesdites zones encrassées étant ouvertes vers le fond dudit carter de telle sorte que des matières solides puissent tomber depuis lesdites zones sur le fond dudit carter, chacun desdits carters étant relié à ladite sortie (14) d'écoulement de gaz de ladite chambre collectrice;
- une sortie prévue au fond de chaque carter (21) d'unités de filtrage pour l'évacuation desdites matières solides, une sortie (34) partant d'une zone propre du carter de filtre associé pour ledit écoulement de gaz; et
- pour chaque unité de filtrage (16), une première soupape (38) située entre elles et ladite sortie d'écoulement de gaz (14) de ladite chambre collectrice pour arrêter un écoulement à travers ladite unité de filtrage quand il est souhaité de nettoyer ladite unité de filtrage, une seconde soupape (40) située dans ladite sortie d'écoulement de gaz du carter de filtre pour être actionnée en association avec ladite première soupape (38) afin d'isoler complètement ladite unité de filtrage (16) dudit conduit, une troisième soupape (55) située dans ladite sortie de matières solides au fond dudit carter de filtre et une quatrième soupape (56) reliant ledit carter de filtre (21) à une source de gaz à une pression supérieure à la pression régnant dans ladite chambre collectrice (2);
- ledit appareillage étant caractérisé par un conduit (58) raccordé de façon permanente entre ladite sortie de matières solides de chaque carter de filtre (21) et ladite chambre collectrice (2) par l'intermédiaire de ladite troisième soupape (55), de telle sorte que lesdites matières solides s'accumulant à proximité de ladite sortie de matières solides puissent être transférées vers ladite chambre collectrice (2) par fermeture desdites première et seconde soupapes (38, 40) pour isoler ladite unité de filtrage (16) et ensuite par ouverture desdites troisième et quatrième soupapes (55, 56); et
- par un moyen de transport étanché à la pression et relié à ladite zone de collecte de décharge de matières solides situées dans ladite chambre collectrice (2) de telle sorte que des matières solides puissent être évacuées de ladite chambre collectrice (2) sans arrêter ledit écoulement de gaz.

2. Appareillage tel que défini dans la revendication 1, caractérisé en outre par des tuyères (42) situées dans chaque unité de filtrage et positionnées dans lesdites zones propres pour diriger de l'air à travers lesdits filtres (20) en direction desdites zones encrassées, lesdites tuyères étant reliées à une source d'air comprimé (44, 46) de façon que les matières solides s'accumulant sur lesdits filtres (20) puissent être enlevées de ceux-ci lorsqu'un écoulement à travers ladite unité de filtrage (16) est arrêté par au moins ladite première soupape (38), lesdites matières solides pouvant alors tomber sur le fond dudit carter de filtre (21).

3. Appareillage tel que défini dans la revendication 1, caractérisé en ce que la pression dans ladite chambre collectrice (2) est inférieure à la pression ambiante régnant à l'extérieur de l'appareillage et en ce que ladite source de gaz à laquelle sont reliées lesdites quatrièmes soupapes (56) est l'air ambiant extérieur à l'appareillage.

4. Appareillage tel que défini dans la revendication 1, dans lequel ledit moyen de transport étanché à la pression et relié à ladite zone de collecte et de décharge de matières solides située dans ladite chambre collectrice (2) est caractérisé par un tunnel de décharge (8) servant à recevoir lesdites matières solides par l'intermédiaire d'une ouverture prévue à la base de ladite chambre collectrice (2), ainsi que par un piston (10) se déplaçant alternativement dans ledit tunnel de décharge (8) pour faire pousser un tampon de matières solides le long dudit tunnel de décharge à partir de la zone de ladite ouverture, l'étanchéité de ladite zone de décharge étant assurée par le tampon de matières solides se trouvant dans ledit tunnel de décharge (8), la pression dans ladite chambre collectrice (2) étant inférieure à la pression ambiante autour de l'appareillage.

5. Appareillage tel que défini dans la revendication 4, caractérisé en ce que la section dudit tunnel de décharge (8) est réduite vers l'aval du tunnel à partir de la zone dudit piston (10), ladite partie de section réduite définissant un col (19, 23), l'étanchéité de ladite zone de décharge étant assurée par le fait que le tampon de matières solides est soumis à un tassement vers l'arrière dans ledit col, du fait que la pression ambiante est supérieure à la pression dans ladite chambre collectrice (2).

6. Appareillage tel que défini dans la revendication 1, caractérisé par un ventilateur (4) pour créer une aspiration, ledit ventilateur étant relié à ladite entrée (1) par l'intermédiaire de ladite chambre collectrice (2), ladite chambre collectrice (2) étant raccordée de façon à recevoir des matières solides entraînées dans l'écoulement de gaz à partir de ladite entrée (1) et comportant un échappement supérieur (14) débouchant dans lesdites unités de filtrage (16) ainsi qu'une sortie prévue dans le fond étanché à la pression pour des matières solides tombant à partir dudit écoulement de gaz ; lesdites unités de filtrage (16), prévues au moins au nombre de deux, étant installées en parallèle entre ladite chambre collectrice (2) et ledit ventilateur (4), lesdites zones encrassées desdits filtres (20) étant raccordées pour recevoir ledit écoulement de gaz à partir dudit échappement supérieur (14) en provenance de ladite chambre collectrice (2), et lesdites zones propres desdits filtres (20) étant raccordés de façon à déboucher en direction dudit ventilateur (4).

7. Appareillage tel que défini dans la revendication 6, caractérisé en outre par des tuyères à air (42) situées dans chaque unité de filtrage et positionnées dans lesdites zones propres pour diriger de l'air à travers lesdits filtres (20) en direction desdites zones encrassées, lesdites tuyères à air étant raccordées à une source d'air comprimé (44, 46) afin de nettoyer les filtres (20) en enlevant des matières solides de ceux-ci, lorsque un écoulement les traversant est arrêté par au moins ladite première soupape (38), d'une manière telle que des matières solides s'accumulant sur lesdits filtres tombent sur le fond dudit carter de filtre (21).

8. Appareillage tel que défini dans la revendication 6, dans lequel ladite sortie inférieure pour lesdites matières solides est caractérisée par une ouverture débouchant dans un ensemble de décharges, ledit ensemble de décharge comprenant un tunnel (8) et un piston (10) se déplaçant alternativement dans ledit tunnel pour pousser un tampon de matières solides le long dudit tunnel à partir de la zone de ladite ouverture, l'étanchéité de ladite sortie inférieure étant produite par le tampon de matières solides se trouvant dans ledit tunnel.

9. Appareillage tel que défini dans la revendication 8, caractérisé en ce que ledit tunnel (8) comporte une partie de section réduite située vers l'aval du tunnel à partir dudit piston (10), ladite partie de section réduite définissant un col (23, 19), l'étanchéité de ladite sortie inférieure étant produite par le fait que ledit tampon de matières solides est soumis à un tassement vers l'arrière dans ledit col.

10. Une remorque étanchée contenant l'appareillage selon les revendications 1 ou 6, ladite remorque comportant un groupe ventilateur aspirant de l'air à partir de celle-ci à travers un filtre, de telle sorte que ladite remorque (70) soit maintenue à une pression légèrement négative à tous moments, afin que des matières s'échappant dudit appareillage restent maintenues dans ladite remorque ou soient arrêtées par ledit filtre (20).
